Europäisches Patentamt

European Patent Office

Office européen des brevets

(19)

(11) Veröffentlichungsnummer: **0 056 215**
**B1**

# (12) EUROPÄISCHE PATENTSCHRIFT

(45) Veröffentlichungstag der Patentschrift:
**19.06.85**

(21) Anmeldenummer: **81730005.6**

(22) Anmeldetag: **12.01.81**

(51) Int. Cl.⁴: **G 01 N 21/89**, G 01 N 25/72

(54) **Vorrichtung und Verfahren zur Inspektion von Gusssträngen in einer Stranggiessanlage.**

(43) Veröffentlichungstag der Anmeldung:
**21.07.82 Patentblatt 82/29**

(45) Bekanntmachung des Hinweises auf die Patenterteilung:
**19.06.85 Patentblatt 85/25**

(84) Benannte Vertragsstaaten:
**AT BE CH DE FR GB IT LI LU NL SE**

(56) Entgegenhaltungen:
**DE - A - 1 798 028**
**DE - A - 2 163 627**
**DE - A - 2 311 325**
**DE - A - 2 911 578**
**DE - A - 3 000 875**

(73) Patentinhaber: **MANNESMANN Aktiengesellschaft,
Mannesmannufer 2, D-4000 Düsseldorf 1 (DE)**

(72) Erfinder: **Gruner, Hans, Ing.grad., Am Knappert 39,
D-4100 Duisburg 29 (DE)**
Erfinder: **Schrewe, Hans, Ing.grad., Fliederweg 34,
D-4000 Düsseldorf 31 (DE)**
Erfinder: **Pleschiutschnigg, Fritz-Peter Dr. Ing., An der
Huf 53, D-4100 Duisburg 29 (DE)**
Erfinder: **Parschat, Lothar, Ing.grad.,
Frankenstrasse 375, D-4300 Essen (DE)**

(74) Vertreter: **Meissner, Peter E., Dipl.-Ing. et al,
Patentanwälte Dipl.-Ing. Peter E. Meissner Dipl.-Ing.
Hans-Joachim Presting Herbertstrasse 22,
D-1000 Berlin 33 (DE)**

## Beschreibung

Die Erfindung betrifft eine Vorrichtung zur Inspektion von Gußsträngen in der Gießhitze in einer Stranggießanlage und ein Verfahren hierzu unter Verwendung dieser Vorrichtung.

Bisher werden die Oberflächen von stranggegossenem Material visuell auf Oberflächenfehler untersucht. Weiterhin sind Verfahren bekannt, bei denen Schallaufeigenschaften, Magnetfeldänderungen oder chemische Effekte (Metal check) angewendet werden. Diese Verfahren sind ausschließlich an kaltem (T $\leq$ 300°C) und vorzugsweise an unbewegtem Material anwendbar.

Die zur Zeit bekannten optischen Verfahren arbeiten z. B. mit Fremdlicht und bewerten die von Oberflächenfehlern erzeugten Reflexionen. Ein derartiges System ist z. B. aus der DE-A-2 911 578 bekannt.

Ferner ist aus der DE-A-2 163 627 bekannt die Schweißqualität geschweißter Rohre durch Ermitteln der in der Schweißnaht umgesetzten Wärmeenergie zu überwachen. Hierzu wird eine wärmestrahlungsempfindliche Sonde verwendet, die auswertbare elektrische Signale erzeugt.

Die DE-A-3 000 875 beschreibt schließlich ein Oberflächenprüfsystem für ein warmes strahlendes Werkstück beispielsweise für einen ein Warmwalzwerk verlassenden Block. Benutzt werden hierzu eine oder mehrere Diodenzeilenkameras.

Aufgabe der Erfindung ist es, auf heißen, im Produktionsfluß befindlichen Strangoberflächen charakteristische Merkmale, wie z. B. Oberflächenfehler zu erkennen und eine Vorrichtung zu schaffen, mit deren Hilfe frühzeitige Aussagen über Lage und Stärke der Fehler zwecks Qualitätsbestimmung zu treffen, sowie die Geometrie des Stranges zu beurteilen. Die Vorrichtung soll ferner zur Inspektion von Strängen unterschiedlicher Querschnittsform und unterschiedlicher Abmessung, insbesondere jedoch von Rundsträngen geeignet sein.

Bei der Erfindung wird zur Inspektion der Gußstränge in einer Stranggießanlage eine bekannte Einrichtung mit lichtempfindlichen Zellen (Dioden-Zeilen-Kamera oder auch Line Scan Camera) benutzt, die auf die Eigenstrahlung des Stranges in der Gießhitze, also bei Temperaturen > 500°C anspricht, wobei diese Kamera innerhalb eines wassergekühlten Gehäuses in unmittelbarer Nähe des Stranges angeordnet ist. Erfindungsgemäß ist die Vorrichtung dadurch gekennzeichnet, daß das wassergekühlte Gehäuse zweiteilig ausgebildet ist und mindestens eine Trennfuge der Gehäuseteile in einer Ebene liegt, die lotrecht zur Strangachse verläuft und daß die auf der dem Strang zugekehrten Seite liegende Trennfuge einen Spalt beläßt, der mit einem verschiebbaren Blech verschlossen ist, das Blech mit einem engen Schlitz versehen ist, an den die Dioden-Zeilen-Kamera angeflanscht ist und die Kamera innerhalb des wassergekühlten Gehäuses entlang des Spaltes verschiebbar gelagert und mit einem Antriebselement versehen ist. In weiterer Ausgestaltung der Vorrichtung wird vorgeschlagen, daß das wassergekühlte Gehäuse die Gestalt eines Hohlringes aufweist und den Gußstrang konzentrisch umgibt. Dabei ist es von Vorteil, die Kamera innerhalb des Gehäuses mittels einer Kugel-Drehverbindung umlaufend verschiebbar zu lagern. Das Verschieben der Kamera erfolgt mittels eines Antriebselementes, das vorzugsweise ein drehzahlgeregeltes Antriebselement elektrischer, hydraulischer oder auch pneumatischer Art sein kann. Das Antriebselement ist am Gehäuse ortsfest gelagert.

In weiterer Ausgestaltung der Erfindung besteht das Gehäuse aus dicht aneinander geschlossenen Rohren, wobei aneinandergrenzende Rohre jeweils einem eigenen getrennten Kühlkreislauf zugeordnet sind. Für eine leichte Montage der gesamten Einrichtung hat es sich herausgestellt, daß es von Vorteil ist, in Strangabzugsrichtung gesehen, den unteren Gehäuseteil U-förmig auszubilden. Zur Vergleichmäßigung der Temperatur in diesem Gehäuse ist es zweckmäßig, auf der Innenseite des Gehäuses wendelförmig verlaufende Blechlamellen anzuordnen, die sich radial bis dicht an das Kameragehäuse erstrecken. Sofern innerhalb des wassergekühlten Gehäuses nur eine Einzelkamera untergebracht ist, ist es zur Erzielung eines möglichst hohen Grades an Gleichlauf zweckmäßig, auf der der Kamera gegenüberliegenden Seite des Tragringes ein Kontergewicht anzubringen. Vorteilhaft ist es jedoch, innerhalb des Gehäuses eine weitere Zeilenkamera anzuordnen, die der ersten diametral gegenüberliegend an demselben Tragring befestigt ist und demgemäß beide Kameras von demselben Antriebselement angetrieben sind. Bei Anwendung zweier Kameras sind die Diodenzellen der gegenüberliegenden Kameras um 90° gegeneinander gedreht.

Zur Erfindung gehört ferner ein Verfahren zur Inspektion von Gußsträngen in der Strangggießanlage unter Verwendung der vorbeschriebenen Vorrichtung, das dadurch gekennzeichnet ist, daß die Umlaufgeschwindigkeit der Kamera um den Strang an die jeweilige Strangabzugsgeschwindigkeit derart angepaßt ist, daß die von der Kamera erfaßte Fläche des Stranges nach einem Umlauf von der des folgenden Umlaufs um 5 bis 50% überlappt wird.

Eine weitere vorteilhafte Ausgestaltung der Erfindung besteht darin, daß bei von der Strangquerschnittsform abweichender Umlaufbahn der Kamera bei vorgegebener Strangabzugsgeschwindigkeit die kritische Winkelgeschwindigkeit $(d\varphi : dt)$ im Kantenbereich des Stranges $\leq (ds : dt)_{max}$ ist, wobei s die entsprechende Wegstrecke auf dem Strangumfang im Kantenbereich darstellt. Dabei ist es zweckmäßig, daß der Schärfentiefebereich des optischen Systems der Kamera mit an sich bekannten Mitteln vom Weg abhängig gesteuert wird.

Die Erfindung sei anhand eines Ausführungsbeispieles und der beiliegenden Zeichnung beschrieben. Es zeigt

Fig. 1 eine Bogenstranggießanlage in schematischer Darstellung mit dem Einbauort der erfindungsgemäßen Vorrichtung,

Fig. 2 die erfindungsgemäße Einrichtung im Querschnitt bei Anwendung auf einem Rundstrang,

Fig. 3 ein Inspektions- und Auswertschema an einem Rundstrang,

Fig. 4 dient der Erläuterung des Anwendungsfalles der sich auf einer Kreisbahn bewegenden Kamera bei Inspektion eines Quadratstranges,

Fig. 5 einen Querschnitt durch die Einrichtung 20 mit einem Teil der inneren Gehäusewand 1″ in der Ansicht A-B, und

Fig. 6 mögliche Ausgestaltungen der Abdeckung des Gehäuseschlitzes 4 nach Fig. 1.

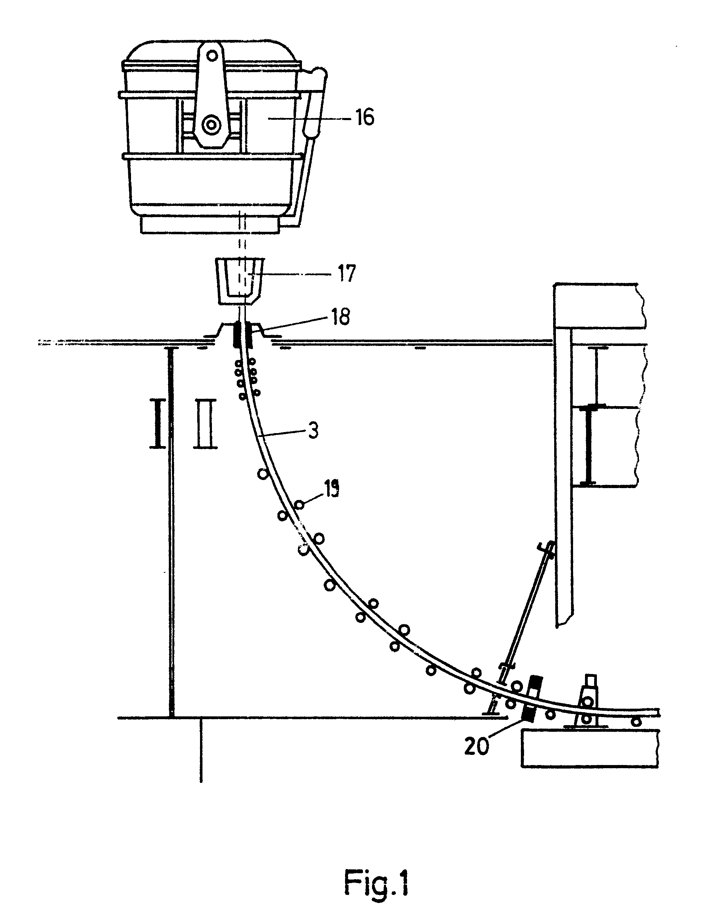

In Fig. 1 ist eine Gießpfanne mit 16 bezeichnet, die den Verteiler 17 mit flüssigem Stahl versorgt, von wo aus der Stahl in die Kokille 18 fließt und dort den bogenförmigen Strang 3 bildet. Der Strang wird von Stützrollen 19 bogenförmig geführt. Gegen Ende des Bogenbereiches ist die erfindungsgemäße Vorrichtung zur Inspektion der Oberfläche des Stranges mit 20 bezeichnet.

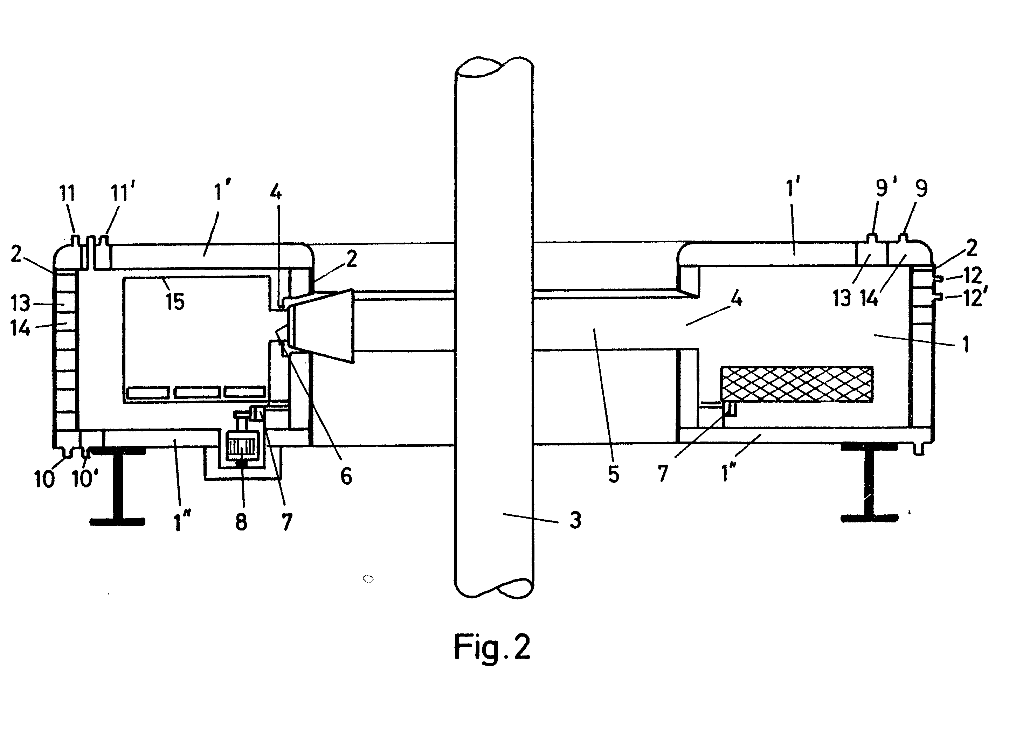

In Fig. 2 ist der Strang 3 einer Vertikalanlage dargestellt. Der Strang 3 ist von einem konzentrisch ausgebildeten Gehäuse 1 umgeben. Das Gehäuse besteht aus zwei Teilen 1′ und 1″ und ist wassergekühlt. Das Kühlsystem des Gehäuses wird gebildet aus Röhren rechteckigen Querschnitts 13, 14 die dicht aneinandergefügt und verschweißt sind. Für jedes Gehäuseteil 1′, 1″ sind getrennte Kühlsysteme vorgesehen. Ferner sind in jedem Gehäuseteil selbst stets zwei aneinandergrenzende Rohre eigenen Kühlsystemen zugeordnet. So besteht das Gehäuseteil 1′ aus einem Kühlkreislauf mit dem Wassereintritt 9 und dem Wasseraustritt 11 sowie dem angrenzenden eigenen Kühlsystem des benachbarten Rohres mit dem Wassereintritt 9′ und dem Wasseraustritt 11′. In gleicher Weise ist das untere Gehäuseteil 1″ mit getrennten Kühlkreisläufen versehen, wobei die jeweiligen Wassereinlauföffnungen mit 10 bzw. 10′ und die entsprechenden Abflußöffnungen mit 12 bzw. 12′ bezeichnet sind. Die beiden Gehäuseteile 1′, 1″ sind durch Trennfugen 2 voneinander getrennt, von denen mindestens eine Trennfuge 2 in einer Ebene liegt, die senkrecht zur Strangachse verläuft. Die Trennfuge, die dem Strang zugekehrt ist, ist dabei gleichzeitig als Spalt 4 ausgebildet. Dieser Spalt ist durch ein verschiebbares Blech 5 verschlossen und weist einen engen, parallel zur Strangabzugsrichtung verlaufenden Spalt 6 auf.

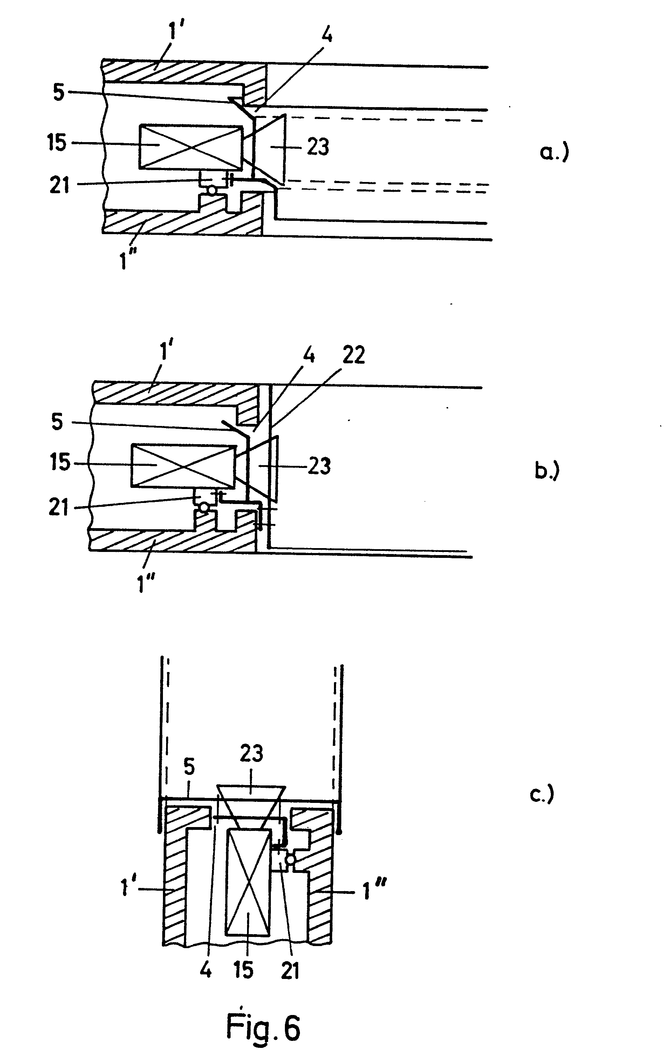

In Fig. 6 ist die Ausbildung des Abdeckbleches 5 des Spaltes 4 nach Fig. 1 vergrößert dargestellt. Der Spalt 4 liegt zwischen den beiden Gehäuseteilen 1′, 1″ und ist mit dem verschiebbaren Blech 5 gegen das Eindringen von Wasser und Schmutz geschützt. Das Blech 5 dient dabei gleichzeitig als Wärmeschutz. Im Teilbild a der Fig. 6 verläuft das Blech von der Innenkante des Gehäuseteiles 1′ in den Spalt 4 hinein, durchsetzt den Spalt 4 und ist dann auf dem Strang 3 zugeführt und abgewinkelt, so daß ein Teil der Außenwand des Gehäuseteiles 1″ überdeckt ist. Befestigt ist das Blech an dem drehbaren Rahmen 21 der Kugel-Drehverbindung, auf dem auch das Kameragehäuse 15 gelagert ist. Gemäß b nach Fig. 6 ist vor dem ganzen Spalt 4 des Gehäuses ein zusätzlicher Wärmeschutzschild 22 am Abdeckblech 5 befestigt. In Übereinstimmung mit dem Abdeckblech ist auch hier eine dem Schlitz 6 entsprechende Ausnehmung vorgesehen, um der Kamera 15 die Sicht auf den Strang durch den Schutztrichter 23 zu ermöglichen. Die Ausbildung des Abdeckbleches 5 nach a und b der Fig. 6 bietet hinreichenden Schutz bei Einbau der Gesamtvorrichtung 20 in einen Bereich der Anlage, in der der Strang in etwa vertikal geführt ist. Bei Einbau im horizontalen Strangbereich empfiehlt sich eine Ausbildung des Abdeckbleches 5, wie es in c der Fig. 6 dargestellt ist, d. h. das Abdeckblech 5 ist auf der dem Strang zugekehrten Seite des Gehäuses 1 angeordnet und überdeckt hier die gesamte innere Stirnseite des Gehäuses 1 und ist über die Kanten des Gehäuses abgewinkelt.

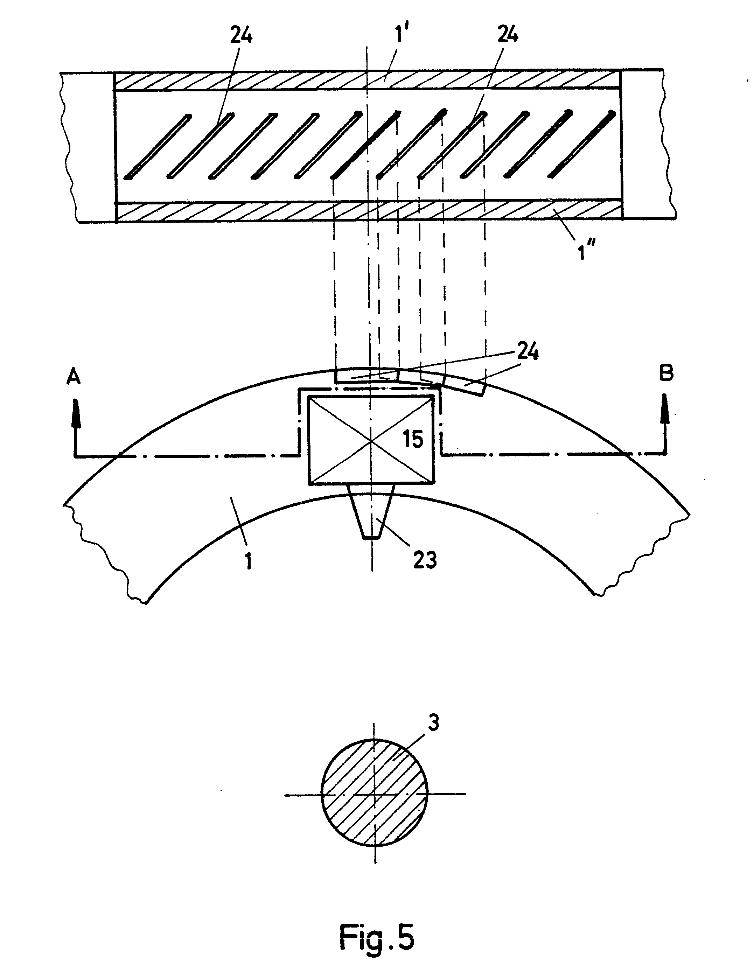

Fig. 5 zeigt im unteren Teilbild eine Draufsicht auf einen Teil des den Strang 3 konzentrisch umgebenden Gehäuses 1. Auch hier ist die Kamera mit 15 und die auf den Strang gerichtete Düse mit 23 bezeichnet. Auf der gesamten Innenseite des Gehäuses 1 sind Blechlamellen 24 geneigt angeordnet, die sich bis dicht an die Umlaufbahn der Kamera 15 erstrecken. Die Anordnung der Blechlamellen 24 wird im oberen Teilbild der Fig. 5 verdeutlicht. Dieses Teilbild ist eine Ansicht nach dem Schnitt A-B des unteren Teilbildes.

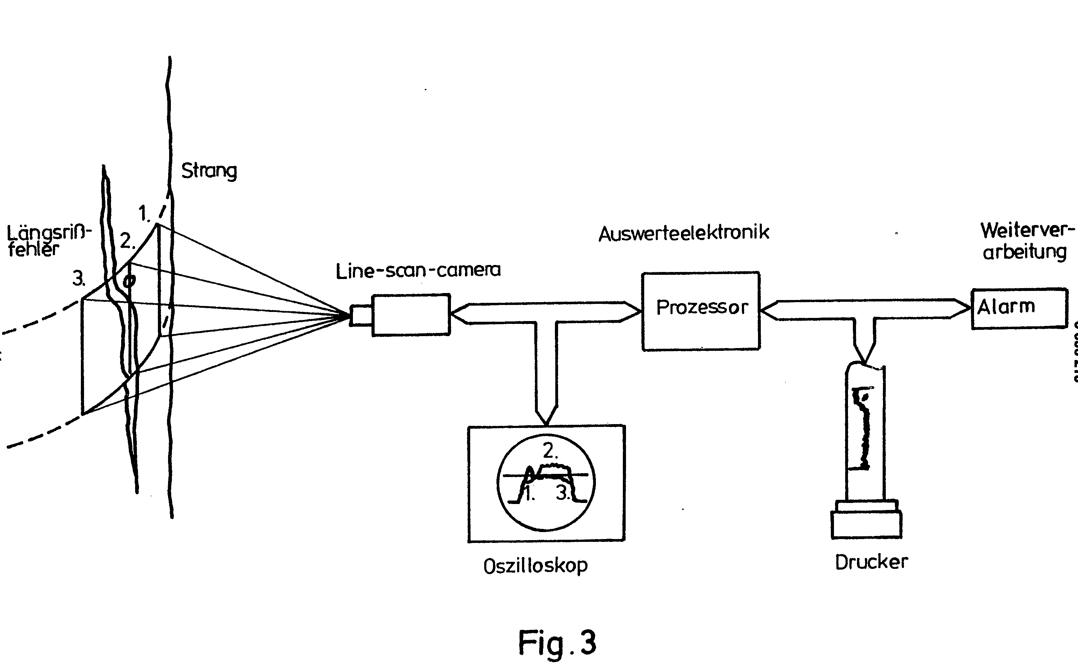

In Fig. 3 ist schematisch die rotierende Meßeinrichtung, ihre Positionierung zur Strangoberfläche und ihre Funktionsweise dargestellt. Sie besteht aus einer Line-scan-camera mit Steuer- und Auswerteelektronik, sowie einem Oszilloskop, einem Ausgabedrucker zur Dokumentation und einer Alarmeinrichtung. Ein Längsriß oder sonstiger Fehler auf der selbst strahlenden Strangoberfläche wird von der Kamera zeilenweise detektiert und bedingt durch Intensitätsschwankungen erkannt.

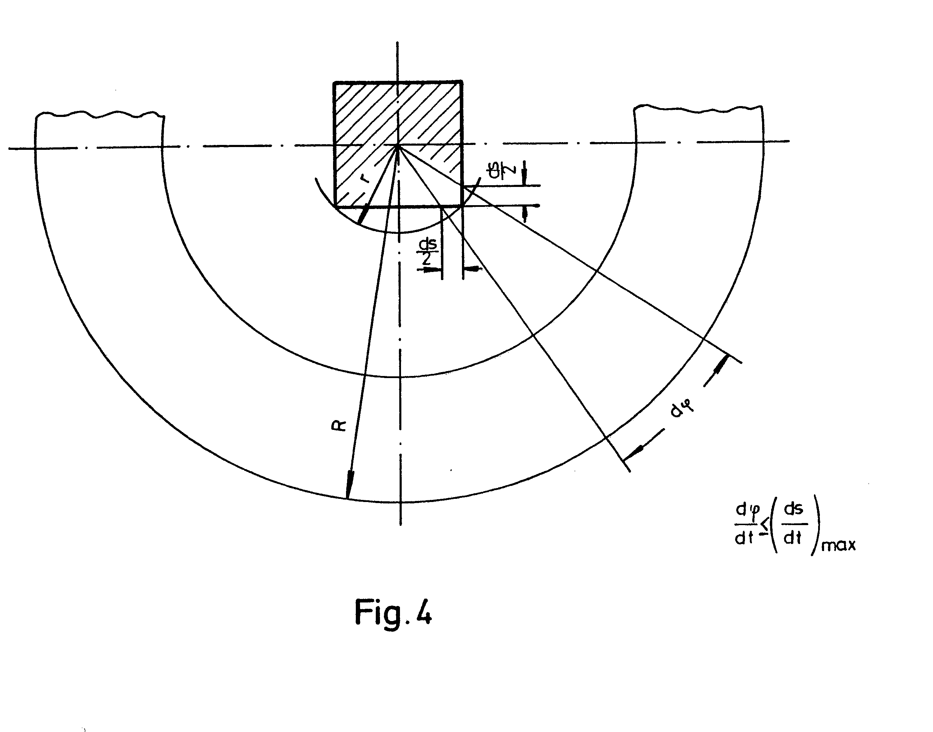

In Fig. 4 ist das Kriterium einer um einen rechteckigen Strang rotierenden Kamera dargestellt. Um das Auflösekriterium sicherzustellen, muß die Winkelgeschwindigkeit $\left(\frac{\delta\varphi}{\delta t}\right)$ der Kamera, die auf einem Kreisbogen mit dem Radius »R« rotiert, zur max. Oberflächenabtastgeschwindigkeit $\left(\frac{\delta S}{\delta t}\right)_{max}$ in Rotationsrichtung auf den rechteckigen Knüppel umhüllenden Kreisbogen mit dem Radius »r« folgende Bedingung erfüllen:

$$\left(\frac{\delta\varphi}{\delta t}\right) \leq \left(\frac{\delta S}{\delta t}\right)_{max}$$

## Patentansprüche

1. Vorrichtung zur Inspektion von Gußsträngen in einer Stranggießanlage, bestehend aus einer Einrichtung mit mindestens einer auf die Eigenstrahlung des zu untersuchenden Stranges (3) ansprechenden Diodenzellen-Kamera (15), wobei diese Einrichtung innerhalb eines wassergekühlten Gehäuses in unmittelbarer Nähe des sich noch in der Gießhitze befindlichen Stranges angeordnet ist, dadurch gekennzeichnet, daß das wassergekühlte Gehäuse (1) zweiteilig (1', 1") ausgebildet ist und mindestens eine Trennfuge (2) der Gehäuseteile in einer Ebene liegt, die lotrecht zur Strangachse verläuft und daß die auf der dem Strang (3) zugekehrten Seite liegende Trennfuge einen Spalt (4) beläßt, der mit einem verschiebbaren Blech (5) verschlossen ist, das Blech (5) mit einem engen Schlitz (6) versehen ist, an den die Dioden-Zeilen-Kamera (15) angeflanscht ist und die Kamera innerhalb des wassergekühlten Gehäuses (1) entlang des Spaltes verschiebbar gelagert (7) und mit einem Antriebselement (8) versehen ist.

2. Vorrichtung zur Inspektion von Gußsträngen nach Anspruch 1, dadurch gekennzeichnet, daß das wassergekühlte Gehäuse (1) die Gestalt eines Hohlringes aufweist und den Gußstrang konzentrisch umgibt.

3. Vorrichtung nach Anspruch 2, dadurch gekennzeichnet, daß die Kamera innerhalb des Gehäuses (1) mittels einer Kugel-Drehverbindung umlaufend verschiebbar gelagert ist.

4. Vorrichtung nach den Ansprüchen 1 bis 3, dadurch gekennzeichnet, daß das Antriebselement (8) ein drehzahlgeregeltes Antriebselement ist und am Gehäuse (1) ortsfest gelagert ist.

5. Vorrichtung nach Anspruch 1, dadurch gekennzeichnet, daß das Gehäuse (1) aus dicht aneinander geschlossenen Rohren gebildet ist.

6. Vorrichtung nach den Ansprüchen 1 und 5, dadurch gekennzeichnet, daß aneinandergrenzende Rohre (13, 14) der Gehäuseteile (1', 1") getrennte Kühlkreise bilden, die aus einem Wasseranschluß (9, 9', 10, 10'), einem Rohr (13, 14) und einem Wasserabfluß (11, 11', 12, 12') bestehen.

7. Vorrichtung nach den Ansprüchen 2 bis 6, dadurch gekennzeichnet, daß auf der Innenseite des Gehäuses zur Strangachse (1) geneigt verlaufende Blechlamellen (24) angeordnet sind, die sich radial bis dicht an das Kameragehäuse (15) erstrecken.

8. Vorrichtung nach Anspruch 1, dadurch gekennzeichnet, daß das verschiebbare Blech (5) mit dem Kameragehäuse (15) lösbar verbunden ist und den Spalt abdichtend verschließt.

9. Vorrichtung nach Anspruch 1, dadurch gekennzeichnet, daß innerhalb des Gehäuses (1) eine weitere Zeilenkamera der ersten diametral gegenüberliegend angeordnet ist und beide Kameras von demselben Antriebselement (8) antreibbar sind.

10. Vorrichtung nach Anspruch 1 und 9, dadurch gekennzeichnet, daß die Diodenzeilen der gegenüberliegenden Kameras um 90° gegeneinander gedreht angeordnet sind.

11. Vorrichtung nach einem der vorstehenden Ansprüche, dadurch gekennzeichnet, daß für die elektronische Verbindung zwischen der Kamera (15) und dem stationären Teil der Vorrichtung an sich bekannte Mittel vorgesehen sind, z. B. eine Schleifringverbindung, eine induktive Koppelung, eine Infrarot-Empfänger-Einrichtung.

12. Verfahren zur Inspektion von Gußsträngen innerhalb einer Stranggießanlage unter Verwendung einer Vorrichtung nach Anspruch 2, dadurch gekennzeichnet, daß die Umlaufgeschwindigkeit der Kamera um den Strang an die jeweilige Strangabzugsgeschwindigkeit derart angepaßt wird, daß die von der Kamera erfaßte Fläche des Stranges nach einem Umlauf von der des folgenden Umlaufs um 5 bis 10% überlappt wird.

13. Verfahren nach Anspruch 12, dadurch gekennzeichnet, daß bei von der Strangquerschnittsform abweichender Umlaufbahn der Kamera bei vorgegebener Stranggeschwindigkeit die kritische Winkelgeschwindigkeit ($d\varphi : dt$) im Kantenbereich des Stranges kleiner als die maximale Oberflächenabtastgeschwindigkeit ($ds : dt$)$_{max}$ ist, wobei s die entsprechende Wegstrecke auf dem Strangumfang im Kantenbereich darstellt.

14. Verfahren nach Anspruch 13, dadurch gekennzeichnet, daß der Schärfentiefenbereich des optischen Systems der Kamera mit an sich bekannten Mitteln wegabhängig gesteuert wird.

## Claims

1. Device for the inspection of casting billets in a continuous casting installation, consisting of an apparatus with at least one diode line camera (15) responding to the characteristic radiation of the billet (3) which is to be examined, in which this apparatus is arranged within a water-cooled housing in the immediate vicinity of the billet which is still at casting heat, characterized in that the water-cooled housing (1) is constructed in two parts (1', 1") and at least one plane of separation (2) of the housing parts lies in a plane which runs perpendicular to the billet axis and that the plane of separation on the side facing the billet (3) leaves a gap (4), which is closed by a slidable plate (5) which plate (5) is provided with a narrow slit (6), onto which the diode-line-camera (15) is flanged, and the camera is slidably mounted (7) along the gap inside the water-cooled housing (1) and is provided with a drive element (8).

2. Device for the inspection of casting billets according to Claim 1, characterized in that the water-cooled housing (1) has the form of a hollow ring and surrounds the casting billet concentrically.

3. Device according to Claim 2 characterized in that the camera is mounted so as to be slid in a revolving manner within the housing (1) by means of a ball turning connection.

4. Device according to Claims 1 to 3, characterized in that the drive element (8) is a speed-regulated drive element and is permanently mounted on the housing (1).

5. Device according to Claim 1, characterized in that the housing (1) is formed from pipes which are tightly closed adjacent to each other.

6. Device according to Claims 1 and 5, characterized in that pipes (13, 14) of the housing parts (1', 1'') which are adjacent to each other form separate cooling circuits, which consist of a water connection (9, 9', 10, 10'), a pipe (13, 14) and a water discharge (11, 11', 12, 12').

7. Device according to Claims 2 to 6, characterized in that on the inner side of the housing metal sheets (24) are arranged running inclined to the billet axis (1), which extend radially up to closely against the camera housing (15).

8. Device according to Claim 1, characterized in that the slidable plate (5) is detachably connected with the camera housing (15) and closes the gap tightly.

9. Device according to Claim 1, characterized in that within the housing (1) a further line camera is arranged lying diametrically opposite the first and both cameras are able to be driven by the same drive element (8).

10. Device according to Claim 1 and 9, characterized in that the diode lines of the opposite camera are arranged rotated through 90° with respect to each other.

11. Device according to one of the preceding Claims, characterized in that for the electronic connection between the camera (15) and the stationary part of the device means are provided, which are known per. se, eg. a slip ring connection, an inductive coupling, an infrared transmitter/receiver apparatus.

12. Method for the inspection of casting billets within a continuous casting installation, using a device according to Claim 2, characterized in that the rotational speed of the camera around the billet is adaptet to the respektive billet withdrawal speed such that the surface of the billet detected by the camera is overlapped after one rotation by that of the following rotation by 5 to 10%.

13. Method according to Claim 12, characterized in that with a circular path of the camera which deviates from the cross-sectional shape of the billet, at a given billet speed the critical angular velocity $(d\varphi : dt)_{max}$ in the edge region of the billet is less than the maximum surface pickup velocity $(ds : dt)$, in which s represents the corresponding distance on the billet circumference in the edge region.

14. Method according to Claim 13, characterized in that the depth of focus range of the optical system of the camera is controlled dependent upon course by means known per se.

## Revendications

1. Système pour le contrôle de barres de coulée dans une installation de coulée continue, comportant un dispositif pourvu d'au moins une caméra à barrettes de diodes (15) déclenchée par la radiation caractéristique de la barre de coulée (3) à contrôler, ce dispositif étant agencé à l'intèrieur d'un boîtier refroidi par eau à proximité directe de la barre se trouvant encore dans la chaleur de la coulée, caractérisé en ce que le boîtier (1) refroidi par eau est conformé en deux parties (1', 1'') et en ce que au moins un joint de séparation (2) entre les deux parties de boîtier se trouve dans un plan perpendiculaire à l'axe de la barre de coulée, et en ce que le joint de séparation se trouvant sur la face tournée vers la barre (3) laisse une fente (4), qui est obturée par une tôle mobile (5), la tôle (5) étant pourvue d'une étroite fente (6) sur laquelle est attachée la caméra à barrettes de diodes (15) et la caméra étant montée déplaçable à l'intérieur du boîtier (1) refroidi par eau le long de la fente et pourvue d'une élément d'entraînement (8).

2. Système pour le contrôle de barres de coulée selon la revendication 1, caractérisé en ce que le boîtier (1) refroidi par eau présente la forme d'un anneau creux et entoure concentriquement la barre de coulée.

3. Système selon la revendication 2, caractérisé en ce que la caméra à l'intérieur du boîtier (1) est montée déplaçable rotativement au moyen d'une liaison rotative à billes.

4. Système selon l'une quelconque des revendications 1 à 3, caractérisé en ce que l'élément d'entraîment (8) est un élément d'entraînement à vitesse réglable et qu'il est monté fixement sur le boîtier (1).

5. Système selon la revendication 1, caractérisé en ce que le boîtier (1) est constitué de tubes disposés serrés les uns contre les autres.

6. Système selon l'une quelconque des revendications 1 à 5, caractérisé en ce que les tubes (13, 14) contigus des parties de boîtier (1', 1'') forment des cercles de refroidissement séparés, qui se composent d'une arrivée d'eau (9, 9', 10, 10'), d'un tube (13, 14) et d'une évacuation d'eau (11, 11', 12, 12').

7. Système selon l'une quelconque des revendications 2 à 6, caractérisé en ce que, sur la face interne du boîtier sont agencées des lamelles de tôle (24) inclinées par rapport à l'axe de la barre de coulée (1), qui s'étendent radialement jusqu'à la proximité immédiate du boîtier (15) de la caméra.

8. Système selon la revendication 1, caractérisé en ce que la tôle (5) mobile est liée de façon amovible avec le boîtier (15) de la caméra et qu'elle ferme la fente de façon hermétique.

9. Système selon la revendication 1, caractérisé en ce que, à l'intérieur du boîtier (1) est agencée une autre caméra à balayage par ligne se trouvant diamètralement opposée à la première et en ce que les deux caméras sont entraînes par le même élément d'entraînement (8).

10. Système selon les revendications 1 et 9, caractérisé en ce que les lignes de diodes des caméras se faisant vis-à-vis sont tournées de 90° les uns par rapport aux autres.

11. Système selon l'une quelconque des revendications précédentes, caractérisé en ce que, pour la liaison électronique entre la caméra (15) et la partie fixe du système sont prévus des moyens connus, par exemple une liaison à bague glissante, un couplage inductif, une installation d'émetteur et récepteur à infrarouges.

12. Procédé pour le contrôle de barres de coulée à l'intérieur d'une installation de coulée en continu par la mise en oeuvre d'un système selon la revendication 2, caractérisé en ce que la vitesse de rotation de la caméra autour de la barre de coulée est adaptée à chaque vitesse d'avance de la barre de façon que la surface de la barre saisie par la caméra après une rotation de celle-ci est recouverte de 5 à 10% par la rotation suivante.

13. Procédé selon la revendication 12, caractérisé en ce que, pour la trajectoire rotative de la caméra s'écartant de la forme de la section de la barre de coulée, avec une vitesse de coulée prédéfinie, la vitesse angulaire critique $(ds : dt)_{max}$, s représentant la distance correspondante sur la périphérie de la barre dans la zone de l'arête.

14. Procédé selon la revendication 13, caractérisé en ce que la plage de profondeur de champ du système optique de la caméra est commandée, en fonction de la distance, par des moyens connus.

Fig.1

Fig.2

0 056 215

**Fig. 3**

$$\frac{d\varphi}{dt} \leq \left(\frac{ds}{dt}\right)_{max}$$

Fig. 4

Fig. 5

Fig. 6